(19)

Europäisches
Patentamt
European
Patent Office
Office européen
des brevets

(11)  **EP 2 677 499 B1**

(12)  **EUROPEAN PATENT SPECIFICATION**

(45) Date of publication and mention
of the grant of the patent:
**26.07.2017  Bulletin 2017/30**

(51) Int Cl.:
**G06K 9/20** *(2006.01)*       **G06T 11/60** *(2006.01)*
**G06T 7/00** *(2017.01)*

(21) Application number: **13172376.9**

(22) Date of filing: **18.06.2013**

(54) **Method, apparatus and computer program product for processing of multimedia content**

Verfahren, Vorrichtung und Computerprogrammprodukt zur Verarbeitung von Multimediainhalt

Procédé, appareil et produit de programme informatique pour le traitement de contenu multimédia

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.06.2012  IN CH24672012**

(43) Date of publication of application:
**25.12.2013  Bulletin 2013/52**

(73) Proprietor: **Nokia Technologies Oy
02610 Espoo (FI)**

(72) Inventors:
• **Muninder, Veldandi
560037 Bangalore (IN)**
• **S V, Basavaraja
560003 Bangalore (IN)**

(74) Representative: **Berggren Oy, Helsinki & Oulu
P.O. Box 16
Eteläinen Rautatiekatu 10A
00101 Helsinki (FI)**

(56) References cited:
EP-A2- 2 389 006       US-A1- 2001 010 896
US-A1- 2003 090 496

• **HARTLEY R I: "Theory and Practice of Projective
Rectification", INTERNATIONAL JOURNAL OF
COMPUTER VISION, KLUWER ACADEMIC
PUBLISHERS, BO, vol. 35, no. 2, 1 January 1999
(1999-01-01), pages 115-127, XP002603298, ISSN:
1573-1405, DOI: 10.1023/A:1008115206617**
• **Seitz: "Toward Image-Based Scene
Representation Using View Morphing",
Proceedings of ICPR, 1 January 1996
(1996-01-01), pages 84-89, XP55017552,
Retrieved from the Internet:
URL:http://ieeexplore.ieee.org/ielx3/3995/
11502/00545996.pdf?tp=&arnumber=545996&is
n umber=11502 [retrieved on 2012-01-25]**
• **VICTOR C S CHEW ET AL: "Panorama stitching
using overlap area weighted image plane
projection and dynamic programming for visual
localization", ADVANCED INTELLIGENT
MECHATRONICS (AIM), 2012 IEEE/ASME
INTERNATIONAL CONFERENCE ON, IEEE, 11
July 2012 (2012-07-11), pages 250-255,
XP032222500, DOI: 10.1109/AIM.2012.6265995
ISBN: 978-1-4673-2575-2**
• **RICHARD SZELISKI AND HEUNG-YEUNG SHUM:
"Creating Full View Panoramic Image Mosaics
and Environment Maps", COMPUTER GRAPHICS
PROCEEDINGS, PROCEEDINGS OF SIGGRAPH
ANNUALINTERNATIONAL CONFERENCE ON
COMPUTER GRAPHICS AND
INTERACTIVETECHNIQUES, XX, XX, 3 August
1997 (1997-08-03), pages 251-258, XP002378648,**

EP 2 677 499 B1

## Description

### TECHNICAL FIELD

Various implementations relate generally to method, apparatus, and computer program product for processing of multimedia content.

### BACKGROUND

The rapid advancement in technology related to capturing multimedia content, such as images and videos has resulted in an exponential increase in the creation of image content. Various devices like mobile phones and personal digital assistants (PDA) are being configured with image/video capture capabilities, thereby facilitating easy capture of the panorama images/videos. The captured images may be subjected to processing based on various user needs. For example, images corresponding to a scene captured from various viewpoints and angles may have a high amount of overlapping image portions. Such images may be processed to for a variety of applications, for example, for generating a panorama image, generating a video content and the like.

In related art EP 2 389 006 A2 discloses an image processing method comprising receiving a plurality of interpolated images that are interpolated from two adjacent camera positions having different image planes, applying a transformation to each interpolated image to a respective one of a plurality intermediate image planes, wherein each intermediate image plane is oriented intermediate to the image planes of the two adjacent camera positions depending on a viewing angle of that interpolated image relative to the adjacent camera positions.

### SUMMARY OF SOME EMBODIMENTS

Various aspects of example embodiments are set out in the claims.

In a first aspect, there is provided a method comprising: determining an angle of rotation between a first image and a second image associated with a multimedia content, the images being captured by a media capturing device spanning or rotating through a range of angles; determining one or more intermediate planes in an overlap region between a first image plane associated with the first image and a second image plane associated with the second image such that the one or more intermediate planes are separated from the first and second images planes by an intermediate angle that is a function of the angle of rotation; projecting at least a portion of the first image associated with the overlap region and at least a portion of the second image associated with the overlap region onto the one or more intermediate planes for processing the first image and the second image; and stitching the first image and the second image by utilizing the projection of at least the portion of the first image and at least the portion of the second image onto the one or more intermediate planes for generating a panorama image by utilizing the first image and the second image.

In a second aspect, there is provided an apparatus comprising means configured to perform the method according to the first aspect.

In a third aspect, there is provided a computer program comprising program instructions which when executed by an apparatus, cause the apparatus to perform the method according to the first aspect.

### BRIEF DESCRIPTION OF THE FIGURES

Various embodiments are illustrated by way of example, and not by way of limitation, in the figures of the accompanying drawings in which:

FIGURES 1A and 1 B illustrate rotation of a device for processing of multimedia content;
FIGURE 2 illustrates a device for processing of multimedia content in accordance with an example embodiment;
FIGURE 3 illustrates an apparatus for processing of multimedia content in accordance with an example embodiment;
FIGURES 4A and 4B illustrate diagrams explaining processing of multimedia content in accordance with example embodiments;
FIGURE 5 illustrate diagram explaining reduction of perspective distortion associated with a multimedia content in accordance with an example embodiment;
FIGURE 6 is a flowchart depicting an example method for processing of images associated with a multimedia content in accordance with an example embodiment;
FIGURE 7 illustrates a flowchart depicting an example method for processing of images associated with a multimedia content in accordance with another example embodiment; and
FIGURES 8 and 9 illustrate a processed multimedia content in accordance with example embodiments.

## DETAILED DESCRIPTION

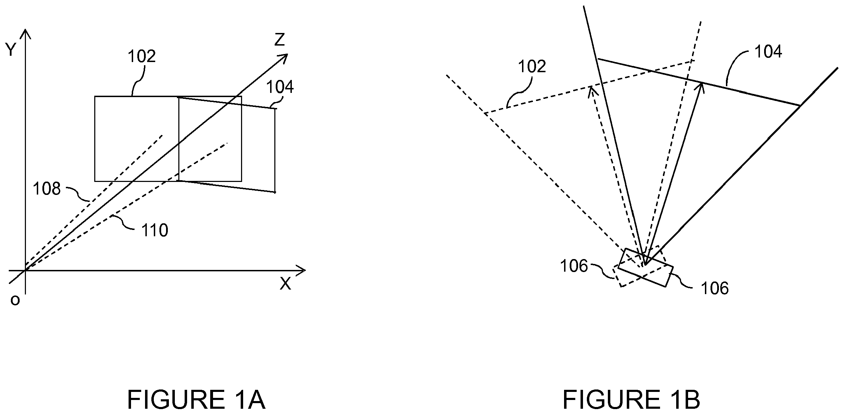

Example embodiments and their potential effects are understood by referring to FIGURES 1A through 9 of the drawings.

FIGURES 1A and 1B illustrate motion of a device for processing of a multimedia content. Examples of the device include a multimedia capturing and recording device, for example a camera, a cell phone, a personal digital assistant (PDA), and the like. In an embodiment, the multimedia content may include images, video content and the like. In an embodiment, the processing of the multimedia content may include generation of panorama image, generation of video content, and the like.

In an example embodiment, a panorama image may be generated by utilizing a plurality of images associated with a sequence of images. As described herein, the term 'panorama image' refers to an image associated with a wider or elongated field of view. A panorama image may include a two-dimensional construction of a three-dimensional (3-D) scene. In some embodiments, the panorama image may provide about 360 degrees view of the scene. The panorama image can be generated by capturing a video footage or multiple still images of the scene, as a media capturing device (for example, a camera) is spanned through a range of angles. For example, as illustrated in FIGURE 1A, the media capturing device may be rotated in various directions, such as around one or more of the directions around x-axis, y-axis and z-axis. The x-axis, y-axis and z-axis may be orthogonal to each other. However, the x-axis, y-axis and z-axis may be set interchangeably in different directions from that shown in FIGURE 1A.

For processing of the multimedia content, a multimedia capturing device may be rotated or spanned through angles along a single direction, for example along a horizontal direction. For example, the multimedia capturing device may be spanned by an angle such as an angle theta about y-axis to capture a plurality of images associated with a sequence of images. As used herein, the 'sequence of images' may refer to images that are a part of a scene or a video, and that may be combined together to generate a complete image (or a panorama image) of the scene. In an embodiment, the angle of rotation may be the angle through which the media capturing device is rotated about an axis to capture adjacent images of the plurality of images. The rotation of the multimedia capturing device is illustrating by utilizing FIGURES 1A and 1B. For example, FIGURE 1A illustrates different images, for example images 102, 104 captured by rotating the multimedia capturing device by an angle, for example angle theta around y-axis.

In an embodiment, the angle of rotation may be an angle enclosed between the projections of the two images, for examples the images 102, 104 at a reference point. In an embodiment, the reference point may be referred to as a center of projection (COP). For example, as illustrated in FIGURE 1A, the COP is illustrated as print 'o' at the intersection of the x-axis and the y-axis. As used herein, the term center of projection may refer to the projection of a 3-D scene towards a single reference point. In an embodiment, the COP may be a position of the multimedia capturing device or a reference point of viewing the scene. For example, FIGURE 1 B illustrates the rotation of the multimedia capturing device, for example a multimedia capturing device 106. The 3-D scene comprises of a plurality of images associated with a sequence, such that the adjacent images of the sequence may include an overlap region. For example, the adjacent images 102 and 104 from the sequence of images may comprise an overlap region. The images of the sequence of images may be defined by a plane, called as projection plane or an image plane.

In an embodiment, if the adjacent images for example, the images 102 and 104 are captured by a rotation or spanning of the multimedia capturing device by an angle (for example angle theta) around the optical axis (y-axis), then the images may differ by an angle 'theta' at the center of projection. In an embodiment, the angle between the images may be same as the angle between the projections of the image at the center of projection. For example, the angle between the images 102, 104 is same as the angle between the projections 108, 110 of the first image 102 and the second image 104 at the COP. In an embodiment, the adjacent images may be stitched in a manner that the angle theta between the images may be close to zero. An advantage of causing the angle theta to be close to zero is that the curving of lines associated with adjacent images, for example images 102, 104 appearing in the processed multimedia content, for example a panorama image may be avoided.

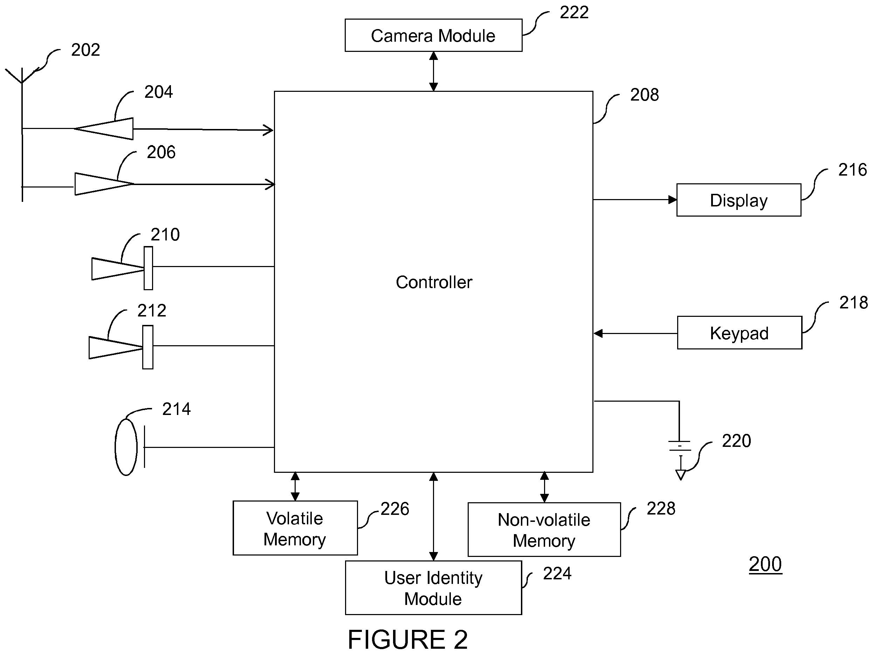

In an embodiment, the curving of lines in the processed image may be avoided by determining at least one intermediate plane or view in an overlap region of the adjacent images such that all the combined views are separated by an theta/(n+1) angle at the COP around y-axis for enabling a smooth transition between the adjacent images. The smooth transition may prevent the curving of lines in the component images of the processed multimedia content, and retain the straight lines. For example, if the number of intermediate planes is two (n=2), and angle of rotation between the two images associated with the multimedia content is about 30 degrees, then three intermediate planes may be generated such that the views differ by about 10 degrees, thereby rendering the lines in the processed multimedia content relatively straight. Various example embodiments describing the devices, apparatus and method for generation of processed multimedia content are explained in detail with reference to FIGURES 2 to 9.

FIGURE 2 illustrates a device 200 in accordance with an example embodiment. It should be understood, however, that the device 200 as illustrated and hereinafter described is merely illustrative of one type of device that may benefit from various embodiments, therefore, should not be taken to limit the scope of the embodiments. As such, it should be appreciated that at least some of the components described below in connection with the device 200 may be optional and thus in an example embodiment may include more, less or different components than those described in connection with the example embodiment of FIGURE 1. The device 200 could be any of a number of types of mobile electronic devices, for example, portable digital assistants (PDAs), pagers, mobile televisions, gaming devices, cellular phones, all types of computers (for example, laptops, mobile computers or desktops), cameras, audio/video players, radios, global positioning system (GPS) devices, media players, mobile digital assistants, or any combination of the aforementioned, and other types of communications devices.

The device 200 may include an antenna 202 (or multiple antennas) in operable communication with a transmitter 204 and a receiver 206. The device 200 may further include an apparatus, such as a controller 208 or other processing device that provides signals to and receives signals from the transmitter 204 and receiver 206, respectively. The signals may include signaling information in accordance with the air interface standard of the applicable cellular system, and/or may also include data corresponding to user speech, received data and/or user generated data. In this regard, the device 200 may be capable of operating with one or more air interface standards, communication protocols, modulation types, and access types. By way of illustration, the device 200 may be capable of operating in accordance with any of a number of first, second, third and/or fourth-generation communication protocols or the like. For example, the device 200 may be capable of operating in accordance with second-generation (2G) wireless communication protocols IS-136 (time division multiple access (TDMA)), GSM (global system for mobile communication), and IS-95 (code division multiple access (CDMA)), or with third-generation (3G) wireless communication protocols, such as Universal Mobile Telecommunications System (UMTS), CDMA2000, wideband CDMA (WCDMA) and time division-synchronous CDMA (TD-SCDMA), with 3.9G wireless communication protocol such as evolved- universal terrestrial radio access network (E-UTRAN), with fourth-generation (4G) wireless communication protocols, or the like. As an alternative (or additionally), the device 200 may be capable of operating in accordance with non-cellular communication mechanisms. For example, computer networks such as the Internet, local area network, wide area networks, and the like; short range wireless communication networks such as Bluetooth® networks, Zigbee® networks, Institute of Electric and Electronic Engineers (IEEE) 802.11x networks, and the like; wireline telecommunication networks such as public switched telephone network (PSTN).

The controller 208 may include circuitry implementing, among others, audio and logic functions of the device 200. For example, the controller 208 may include, but are not limited to, one or more digital signal processor devices, one or more microprocessor devices, one or more processor(s) with accompanying digital signal processor(s), one or more processor(s) without accompanying digital signal processor(s), one or more special-purpose computer chips, one or more field-programmable gate arrays (FPGAs), one or more controllers, one or more application-specific integrated circuits (ASICs), one or more computer(s), various analog to digital converters, digital to analog converters, and/or other support circuits. Control and signal processing functions of the device 200 are allocated between these devices according to their respective capabilities. The controller 208 thus may also include the functionality to convolutionally encode and interleave message and data prior to modulation and transmission. The controller 208 may additionally include an internal voice coder, and may include an internal data modem. Further, the controller 208 may include functionality to operate one or more software programs, which may be stored in a memory. For example, the controller 208 may be capable of operating a connectivity program, such as a conventional Web browser. The connectivity program may then allow the device 200 to transmit and receive Web content, such as location-based content and/or other web page content, according to a Wireless Application Protocol (WAP), Hypertext Transfer Protocol (HTTP) and/or the like. In an example embodiment, the controller 208 may be embodied as a multi-core processor such as a dual or quad core processor. However, any number of processors may be included in the controller 208.

The device 200 may also comprise a user interface including an output device such as a ringer 210, an earphone or speaker 212, a microphone 214, a display 216, and a user input interface, which may be coupled to the controller 208. The user input interface, which allows the device 200 to receive data, may include any of a number of devices allowing the device 200 to receive data, such as a keypad 218, a touch display, a microphone or other input device. In embodiments including the keypad 218, the keypad 218 may include numeric (0-9) and related keys (#, *), and other hard and soft keys used for operating the device 200. Alternatively or additionally, the keypad 218 may include a conventional QWERTY keypad arrangement. The keypad 218 may also include various soft keys with associated functions. In addition, or alternatively, the device 200 may include an interface device such as a joystick or other user input interface. The device 200 further includes a battery 220, such as a vibrating battery pack, for powering various circuits that are used to operate the device 200, as well as optionally providing mechanical vibration as a detectable output.

In an example embodiment, the device 200 includes a media capturing element, such as a camera, video and/or audio module, in communication with the controller 208. The media capturing element may be any means for capturing an image, video and/or audio for storage, display or transmission. In an example embodiment, the media capturing element is a camera module 222 which may include a digital camera capable of forming a digital image file from a captured image. As such, the camera module 222 includes all hardware, such as a lens or other optical component(s), and software for creating a digital image file from a captured image. Alternatively or additionally, the camera module 222 may include the hardware needed to view an image, while a memory device of the device 200 stores instructions for execution by the controller 208 in the form of software to create a digital image file from a captured image. In an example embodiment, the camera module 222 may further include a processing element such as a co-processor, which assists the controller 208 in processing image data and an encoder and/or decoder for compressing and/or decompressing image data. In an embodiment, the processor may be configured to perform processing of the co-processor. For example, the processor may facilitate the co-processor to process the image data and the encoder and/or the decoder. The encoder and/or decoder may encode and/or decode according to a JPEG standard format or another like format. For video, the encoder and/or decoder may employ any of a plurality of standard formats such as, for example, standards associated with H.261, H.262/ MPEG-2, H.263, H.264, H.264/MPEG-4, MPEG-4, and the like. In some cases, the camera module 222 may provide live image data to the display 216. In an example embodiment, the display 216 may be located on one side of the device 200 and the camera module 222 may include a lens positioned on the opposite side of the device 200 with respect to the display 216 to enable the camera module 222 to capture images on one side of the device 200 and present a view of such images to the user positioned on the other side of the device 200.

The device 200 may further include a user identity module (UIM) 224. The UIM 224 may be a memory device having a processor built in. The UIM 224 may include, for example, a subscriber identity module (SIM), a universal integrated circuit card (UICC), a universal subscriber identity module (USIM), a removable user identity module (R-UIM), or any other smart card. The UIM 224 typically stores information elements related to a mobile subscriber. In addition to the UIM 224, the device 200 may be equipped with memory. For example, the device 200 may include volatile memory 226, such as volatile random access memory (RAM) including a cache area for the temporary storage of data. The device 200 may also include other non-volatile memory 228, which may be embedded and/or may be removable. The non-volatile memory 228 may additionally or alternatively comprise an electrically erasable programmable read only memory (EEPROM), flash memory, hard drive, or the like. The memories may store any number of pieces of information, and data, used by the device 200 to implement the functions of the device 200.

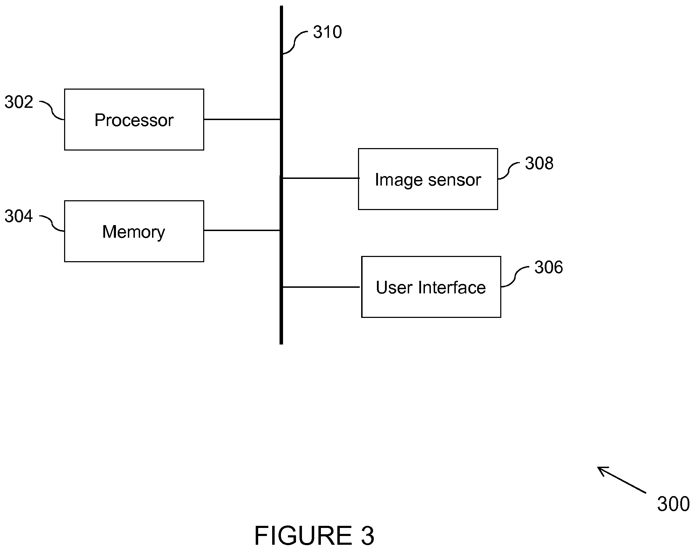

FIGURE 3 illustrates an apparatus 300 for processing of multimedia content in accordance with an example embodiment. The apparatus 300 for processing of multimedia content may be employed, for example, in the device 200 of FIGURE 2. However, it should be noted that the apparatus 300, may also be employed on a variety of other devices both mobile and fixed, and therefore, embodiments should not be limited to application on devices such as the device 200 of FIGURE 2. Alternatively, embodiments may be employed on a combination of devices including, for example, those listed above. Accordingly, various embodiments may be embodied wholly at a single device, (for example, the device 200 or in a combination of devices). It should also be noted that the devices or elements described below may not be mandatory and thus some may be omitted in certain embodiments.

The apparatus 300 includes or otherwise is in communication with at least one processor 302 and at least one memory 304. Examples of the at least one memory 304 include, but are not limited to, volatile and/or non-volatile memories. Some examples of the volatile memory include, but are not limited to, random access memory, dynamic random access memory, static random access memory, and the like. Some example of the non-volatile memory includes, but are not limited to, hard disks, magnetic tapes, optical disks, programmable read only memory, erasable programmable read only memory, electrically erasable programmable read only memory, flash memory, and the like. The memory 304 may be configured to store information, data, applications, instructions or the like for enabling the apparatus 300 to carry out various functions in accordance with various example embodiments. For example, the memory 304 may be configured to buffer input data comprising multimedia content for processing by the processor 302. Additionally or alternatively, the memory 304 may be configured to store instructions for execution by the processor 302.

An example of the processor 302 may include the controller 208. The processor 302 may be embodied in a number of different ways. The processor 302 may be embodied as a multi-core processor, a single core processor; or combination of multi-core processors and single core processors. For example, the processor 302 may be embodied as one or more of various processing means such as a coprocessor, a microprocessor, a controller, a digital signal processor (DSP), processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like. In an example embodiment, the multi-core processor may be configured to execute instructions stored in the memory 304 or otherwise accessible to the processor 302. Alternatively or additionally, the processor 302 may be configured to execute hard coded functionality. As such, whether configured by hardware or software methods, or by a combination thereof, the processor 302 may represent an entity, for example, physically embodied in circuitry, capable of performing operations according to various embodiments while configured accordingly. For example, if the processor 302 is embodied as two or more of an ASIC, FPGA or the like, the processor 302 may be specifically configured hardware for conducting the operations described herein. Alternatively, as another example, if the processor 302 is embodied as an executor of software instructions, the instructions may specifically configure the processor 302 to perform the algorithms and/or operations described herein when the instructions are executed. However, in some cases, the processor 302 may be a processor of a specific device, for example, a mobile terminal or network device adapted for employing embodiments by further configuration of the processor 302 by instructions for performing the algorithms and/or operations described herein.

The processor 302 may include, among other things, a clock, an arithmetic logic unit (ALU) and logic gates configured to support operation of the processor 302.

A user interface 306 may be in communication with the processor 302. Examples of the user interface 306 include, but are not limited to, input interface and/or output user interface. The input interface is configured to receive an indication of a user input. The output user interface provides an audible, visual, mechanical or other output and/or feedback to the user. Examples of the input interface may include, but are not limited to, a keyboard, a mouse, a joystick, a keypad, a touch screen, soft keys, and the like. Examples of the output interface may include, but are not limited to, a display such as light emitting diode display, thin-film transistor (TFT) display, liquid crystal displays, active-matrix organic light-emitting diode (AMOLED) display, a microphone, a speaker, ringers, vibrators, and the like. In an example embodiment, the user interface 306 may include, among other devices or elements, any or all of a speaker, a microphone, a display, and a keyboard, touch screen, or the like. In this regard, for example, the processor 302 may comprise user interface circuitry configured to control at least some functions of one or more elements of the user interface 306, such as, for example, a speaker, ringer, microphone, display, and/or the like. The processor 302 and/or user interface circuitry comprising the processor 302 may be configured to control one or more functions of one or more elements of the user interface 306 through computer program instructions, for example, software and/or firmware, stored on a memory, for example, the at least one memory 304, and/or the like, accessible to the processor 302.

In an example embodiment, the apparatus 300 may include an electronic device. Some examples of the electronic device include communication device, media capturing device with communication capabilities, computing devices, and the like. Some examples of the communication device may include a mobile phone, a personal digital assistant (PDA), and the like. Some examples of computing device may include a laptop, a personal computer, and the like. In an example embodiment, the communication device may include a user interface, for example, the UI 306, having user interface circuitry and user interface software configured to facilitate a user to control at least one function of the communication device through use of a display and further configured to respond to user inputs. In an example embodiment, the communication device may include a display circuitry configured to display at least a portion of the user interface of the communication device. The display and display circuitry may be configured to facilitate the user to control at least one function of the communication device.

In an example embodiment, the communication device may be embodied as to include a transceiver. The transceiver may be any device operating or circuitry operating in accordance with software or otherwise embodied in hardware or a combination of hardware and software. For example, the processor 302 operating under software control, or the processor 302 embodied as an ASIC or FPGA specifically configured to perform the operations described herein, or a combination thereof, thereby configures the apparatus or circuitry to perform the functions of the transceiver. The transceiver may be configured to receive multimedia content. Examples of multimedia content may include audio content, video content, data, and a combination thereof.

In an example embodiment, the communication device may be embodied as to include an image sensor, such as an image sensor 308. The image sensor 308 may be in communication with the processor 302 and/or other components of the apparatus 300. The image sensor 308 may be in communication with other imaging circuitries and/or software, and is configured to capture digital images or to make a video or other graphic media files. The image sensor 308 and other circuitries, in combination, may be an example of the camera module 222 of the device 200.

The components 302-308 may communicate with each other via a centralized circuit system 310 to perform generation of the processed multimedia content. The centralized circuit system 310 may be various devices configured to, among other things, provide or enable communication between the components 302-308 of the apparatus 300. In certain embodiments, the centralized circuit system 310 may be a central printed circuit board (PCB) such as a motherboard, main board, system board, or logic board. The centralized circuit system 310 may also, or alternatively, include other printed circuit assemblies (PCAs) or communication channel media.

In an example embodiment, the processor 302 is caused to, with the content of the memory 304, and optionally with other components described herein, to cause the apparatus 300 to process the multimedia content. In an embodiment, the multimedia content may be prerecorded and stored in the apparatus 300. In another embodiment, the multimedia content may be captured by utilizing the camera module 222 of the device 200, and stored in the memory of the device 200. In yet another embodiment, the device 200 may receive the multimedia content from internal memory such as hard drive, random access memory (RAM) of the apparatus 300, or from external storage medium such as digital versatile disk , compact disk , flash drive, memory card, or from external storage locations through Internet, Bluetooth®, and the like. The apparatus 300 may also receive the multimedia content from the memory 304.

In an embodiment, the multimedia content may comprise a plurality of multimedia frames. In an embodiment, the plurality of multimedia frames may include a sequence of image frames. In an embodiment, the plurality of multimedia frames comprises a sequence of video frames. The sequence of multimedia frames may correspond to a single scene of the multimedia content. In an embodiment, the plurality of multimedia frames may correspond to video content captured by the image sensor 308 and stored in the memory 304. It is noted that the terms 'images', 'multimedia frames' and 'frames' are used interchangeably herein and refer to the same entity. In an embodiment, the multimedia content may comprise a plurality of images associated with a sequence of images associated with a wider or elongated field of view of a scene. In another embodiment, the multimedia content may comprise a plurality of frames associated with a video. It will be noted that the adjacent video frames may include a very less angular shift/rotation, and accordingly, in an embodiment, the plurality of frames may not be adjacent video frames. For example, the plurality of video frames may comprise of video frames having a gap of about 20 video frames there between so that the video frames may be associated with a substantial angular rotation.

In an embodiment, the multimedia content may be captured by a multimedia capturing device, for example, a camera by spanning the multimedia capturing in at least one direction. For example, the multimedia capturing device may be spanned in a horizontal direction around an axis, for example, y-axis to capture the plurality of images. In an embodiment, the adjacent images, for example a first image and a second image, of the plurality of images may include at least an overlap region, as discussed with reference to FIGURES 1A and 1B. The first image and the second image may be located in a first image plane and a second image plane, respectively. In an embodiment, the multimedia capturing device may be caused to span around x-axis and z-axis in addition to the movement around y-axis. Due to the spanning of the multimedia capturing device in 3-D around y-axis, x-axis, and z-axis, the first image and the second image may differ by an angle theta, an angle alpha and an angle beta, respectively. In the present embodiment, the angle of rotation around y-axis, for example, the angle theta may be determined and preserved while the angle alpha and the angle beta may be determined and compensated for the processing of the images.

In an example embodiment, the processor 302 is configured to, with the content of the memory 304, and optionally with other components described herein, to cause the apparatus 300 to determine an angle of rotation between the first image plane and the second image plane associated with the first image and the second image, respectively of a sequence of images. As discussed with reference to FIGURES 1A and 1B, the angle of rotation is indicative of the overlap region between the first image and the second image. In an embodiment, if the multimedia capturing device captures the first image and the second image successively by rotating the multimedia capturing device by an angle, for example, angle theta, the image features associated with the second image may become transformed. In an embodiment, the image features associated with the first image and the second image, for example, a first set of image features and a second set of image features respectively may be computed, and the second set of image features may be projected on to the first image plane. For example, the projections of the second set of image features having a threshold distortion with respect to the first set of image features may be utilized for computing the angle of rotation. In an embodiment, the projections of the second set of image features having minimum distortion with respect to the first set of image features may be utilized for computing the angle of rotation. As used herein, the term 'image features' refers to an information associated with an image. In an example embodiment, the image features may be related to motion in the sequence of images, shapes such as curves, boundaries, corners, and the like.

In an embodiment, the image features associated with the first image and the second image may be computed based on a corner detection method. As used herein, the corner detection method includes extraction of features associated with the first image and the second image, and inferring contents of the images based on the extracted image features. As used herein, the term 'corner' may be defined as an intersection of two edges that may define the boundary between two different objects or the parts of a same object, for example, in an image. In an example embodiment, the corner detection method may include Harris corners method for computing corners. In this embodiment, the image features associated with the first image and the second image may be Harris corner features, which may be computed and arranged in a collection of local feature vectors associated with the first image and the second image, respectively. Each of the feature vectors may be distinctive and invariant to any scaling, rotation and translation of the image. The feature vectors may be utilized for determining distinctive objects in different frames, associated with the first image and the second image.

In an embodiment, if the multimedia capturing device is spanned in one direction only, for example, around the y-axis, the angles of spanning around other directions for example, the angle alpha and the angle beta around the directions x-axis and z-axis respectively are zero. In the present embodiment, the first projection angle between the first image and the second image is determined based at least on the image features associated with the first image and the second image. In particular, the image features of the second image may be projected on the first image such that the angle theta (th) between the projected image features (represented as $x_2'$, $y_2'$) of the second image and the image features (represented as $x_1$, $y_1$) of the first image may as close as possible. In an embodiment, determination of the first projection angle between the first image and the second image may be performed by minimizing the following equation (1):

$$E(th) = \sum (x_1^{\ i} - {x'_2}^{\ i})^2 + (y_1^{\ i} - {y'_2}^{\ i})^2 \qquad \text{-------------- (1)}$$

The equation (1) computes the value of angle 'theta' between the first image and the second image which minimizes the projection of the image features associated with the second image on to the first image in the overlap region. Herein, the projected image features of the second image, $x_2$' and $y_2$' may be computed by using 3-D line equations. For example, the following equation (2) may be utilized for computing the values of the projected image features of the second image:

$$x_2' = f * (d_x - r * \cos(th))/(f + r * \sin(th)); \qquad \text{------------------ (2)}$$

$$y_2' = f * y_2 /(f + r * \sin(th));$$

where,

$$r = w/2 - d_x - x_2;$$

and

$$d_x = f * \tan(th/2)$$

In an embodiment, a range of values of $d_x$ may be considered (this is same as considering a value of theta), and searched for the minimum of equation (1), which gives an optimal solution for the angle theta. In an embodiment, various minimization techniques may be utilized for minimizing equation (1) instead of exhaustive searching.

In an embodiment, if the multimedia capturing device is spanned in more than one direction, for example, around x-axis, y-axis and z-axis, then the angles alpha ($\alpha$) and beta ($\beta$) associated with the rotation about x-axis and z-axis may be compensated. In an embodiment, the angle beta ($\beta$) represents an inplane rotation between the images (or frames) around the z-axis.

In the first image, a plurality of vertical lines is computed by joining image features from the first set of image features. Also, in the second image, a plurality of straight lines may be determined from a matching second set of image features corresponding to the image features of the first set of image features. For example, the combinations of vertical lines (having slopes thereof in the range of 90 +/- 2 degrees) may be considered in the first image and the corresponding straight lines in the second image may be determined. In an embodiment, a deviation of the slope of the plurality of straight lines from the corresponding plurality of vertical lines is computed. In an embodiment, an average of the computed deviations is determined to compute the angle beta ($\beta$). It will be noted that the vertical straight lines are preserved in a specific type of projective transformation, where the projective transformation is caused only by rotation around y-axis and hence the angle beta ($\beta$) is computed by using vertical straight lines. The angle alpha($\alpha$) around x-axis may be approximated as a translation along the vertical direction in a spatial domain in the image and may be computed by exhaustively searching in a specified range. In the present embodiment, -Th < d$\alpha$ <Th, where d$\alpha$ is the vertical translation used instead of angle $\alpha$, and Th =H/20, wherein H is the height of the first image.

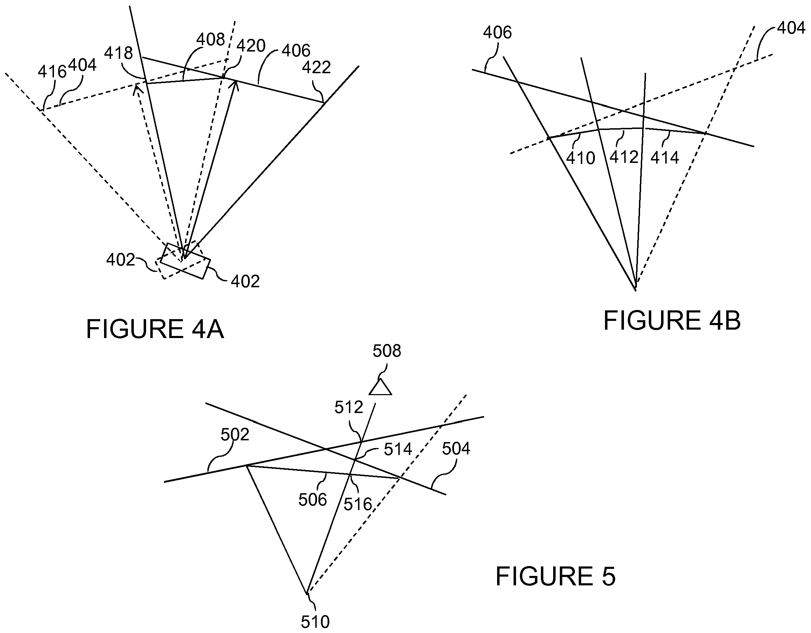

In an example embodiment, the processor 302 is configured to, with the content of the memory 304, and optionally with other components described herein, to cause the apparatus 300 to determine one or more intermediate planes between the first image plane and the second image plane in the overlap region for interfacing the first image plane and the second image plane. In an embodiment, the one or more intermediate plane is configured to be separated by the first image plane and the second image plane by an intermediate projection angle that is function of the first projection angle, theta. For example, the one or more intermediate planes may include three intermediate planes between the first image plane and the second image plane, so that the three intermediate planes divide the angle theta into four portions, each portion having an angular span of theta or four degrees at the COP. An example embodiment illustrating multiple intermediate image planes is described with reference to FIGURES 4A and 4B.

In an embodiment, the at least one intermediate plane comprises at least a portion of the overlap region between the first image and the second image. For example, the at least one intermediate plane may comprise a single intermediate plane separating the first image plane and the second image plane into two halves having an angular span of theta/2 each. In another embodiment, the at least one intermediate plane may comprise multiple intermediate planes, for example, three intermediate plane separating the first image plane and the second image plane into four portions of equal angular spans (for example, theta/four degrees each). In an embodiment, such multiple intermediate image planes may be considered to be within the overlap region only. In another embodiment, at least one of the multiple intermediate image planes may be considered to be outside the overlap region. For example, the first intermediate image plane of the multiple intermediate image planes may be positioned to be extending from the first image plane towards the overlap region. In an embodiment, by determining multiple intermediate image planes between the first image plane and the second image plane facilitates in reducing the curved lines and avoiding distortion in the processed image effectively.

In an example embodiment, the processor 302 is caused to, with the content of the memory 304, and optionally with other components described herein, to cause the apparatus 300 to project at least a portion of the first image associated with the overlap region and at least a portion of the second image associated with the overlap region onto the one or more intermediate planes. In an embodiment, the projection of at least the portion of the first image and at least the portion of the second image onto the one or more intermediate planes facilitates in processing the first image and the second image. For example, in an embodiment, the projection of at least the portion of the first image and at least the portion of the second image facilitates in determining one or more seams in the one or more intermediate planes. The one or more seams may be utilized in stitching the first image and the second image for generation of the processed image. Alternatively, the first image and the second image may be stitched by blending the projection of at least the portion of the first image and at least the portion of the second image onto the one or more intermediate planes to thereby process the first image and the second image. In an example embodiment, the first image and the second image may be processed for generating a panorama image. In another example embodiment, the first image and the second image may be processed for generating a video content. In an embodiment, the processor 302 is caused to, with the content of the memory 304, and optionally with other components described herein, to cause the apparatus 300 to reduce the perspective distortion occurring in the processed images by making use of the 'distance from centre of the image' criterion and appropriately stitching the images. A detailed explanation of utilizing the 'distance from centre of the image' criterion is explained with reference to FIGURE 5, wherein the stitching of two images using one intermediate plane is described. In an embodiment, the seam between the first image and the second image may be determined to be at a central portion of the intermediate plane, and accordingly, the contents from the images that are closer to the respective image centres by a threshold distance may be considered to be a part of the output processed image.

In an embodiment, the first image and the second image may be warped based on the projection. In an example embodiment, the apparatus 300 is caused to stitch the warped images to generate the processed image. For instance, in an example embodiment, the warped images may be stitched by computing a seam between the images and blending the images across the seam. In an example embodiment, the seam between the images may be determined by a dynamic programming based seam computation method.

In some example embodiments, an apparatus such as the apparatus 200 may comprise various components such as means for determining an angle of rotation between a first image and a second image, means for determining one or more intermediate planes in the overlap region between the first image plane and the second image plane; and means for projecting at least a portion of the first image associated with the overlap region and at least a portion of the second image associated with the overlap region onto the one or more intermediate planes to determine one or more seams in the one or more intermediate planes. Such components may be configured by utilizing hardware, firmware and software components. Examples of such means may include, but are not limited to, the processor 302 along with the memory 304, the UI 306, and the image sensor 308.

In an example embodiment, the means for determining the angle of rotation comprises means for: means for determining the first set of image features associated with the first image and a second set of image features associated with the second image; means for projecting the second set of image features onto the first image plane; and means for minimizing a distance between the projected second set of image features and the first set of image features. Examples of such means may include, but are not limited to, the processor 302 along with the memory 304, the UI 306, and the image sensor 308.

In an example embodiment, the means for determining the one or more intermediate planes comprises: means for computing projection of points in vicinity of a periphery of the overlap region; and means for joining the points in vicinity of the periphery in 3-D. In an embodiment, the points in vicinity of a periphery of the overlap region may comprise extreme points of the overlap region. Examples of means for determining the one or more intermediate planes may include, but are not limited to, the processor 302 along with the memory 304, the UI 306, and the image sensor 308. Some embodiments of panorama generation are further described in FIGURES 4A to 9.

FIGURES 4A and 4B illustrate diagrams explaining processing of images in accordance with example embodiments. In an embodiment, the processing of the images may be performed for generating a panorama image. In an embodiment, the processing of the images may be performed for generation of video content. In an embodiment, a multimedia capturing device, for example, a device 402 may be spanned across a scene for capturing a plurality of images, for example images 404 and 406. In another embodiment, the multimedia capturing device, for example, a device 402 may be spanned across a scene for capturing a video content such that frames of video content may be processed for generating processed multimedia content. In an embodiment, upon capturing the first image 404 by the device 402, the device 402 may be moved or rotated in horizontally (for example, around y-axis) to capture the second image, such that a projection of the first image and a projection of the second image may enclose an angle, for example, angle theta at a reference point, also called as centre of projection. The reference point (or the centre of projection) refers to the point of location of the multimedia capturing device 402 (e.g. a camera).

As explained with reference to FIGURE 3, for minimum distortion of the images in the processed image, one or more intermediate planes may be determined between the first image plane and the second image plane, such that the at least one intermediate plane separates the angle of rotation between the first image and the second image by an intermediate angle which is a function of the angle of rotation. For example, if the at least one intermediate plane comprises a single intermediate plane only (for example, an intermediate plane 408 as illustrated in FIGURE 4A), the single intermediate plane 408 may separate the angle of rotation theta between the first image and the second image by an angle theta/2. Similarly, if the at least one intermediate plane comprises a plurality of intermediate planes (for example the three intermediate planes 410, 412, and 414 as illustrated in FIGURE 4B), the plurality of intermediate planes 410, 412, and 414 separates the angle of rotation by intermediate projection angles theta/4. As such, in case of 'n' intermediate planes, the n intermediate planes are configured to separate the first projection angle between the successive planes by an intermediate angle of theta/(n+1). Due to the positioning or determining of 'n' intermediate planes between the first image plane and the second image plane, the first projection angle between them is reduced to intermediate angle of value theta/(n+1) between the successive intermediate planes.

In an embodiment, the processed image is generated by combining the plurality of intermediate planes. In particular, the portions of the first image and the second image may be projected onto the intermediate planes. In an embodiment, a seam is determined between the projected portions of the first image and the second image and the seam may be utilized for stitching the first image and the second image together to thereby form a final processed image. In another embodiment, the portions of the first image and the second image may be projected onto the intermediate planes and stitched together by blending the respective projections of the first image and the second image, to thereby generate the processed image. In an embodiment, the processed image is formed by combining in a sequence of intermediate planes between the first image and the second image. For example, the processed image may be generated by combining the non-overlap portions of the first image and the second image with the overlap portion projected onto the intermediate plane. As illustrated in FIGURE 4A, a processed image, for example, a panorama image may comprises the non-overlap portion 416-418 of the first image, the intermediate plane 408, and the non-overlap portion 420-422 of the second image. Also, as illustrated in FIGURE 4B, the panorama image associated with multiple image planes (for example the image planes 410, 412, and 414) may be generated by stitching the nonoverlapping portions of the first image and the second image with the intermediate image planes 410, 412 and 414 in order associated with the overlapping portion. In an embodiment, the panorama image generated by combining the intermediate planes may preserve the straight lines associated with the first image and the second image, thereby avoiding or minimizing the curving of lines in the panorama image.

It is noted that in the present embodiment, the rotation/spanning of the multimedia capturing device in one direction is considered. However, in certain scenarios, the multimedia capturing device may be spanned in more than one direction, for example, around x-axis and z-axis. The rotation around x-axis may be alpha degrees and the rotation about the z-axis may be beta degrees. In such a scenario, the angles alpha and beta may be computed, for example, by utilizing similarity transformations, and compensated by utilizing inverse transformations so that in the panorama image only the angle theta may be utilized for the determination of the at least one intermediate plane and stitching of the intermediate image planes.

FIGURE 5 illustrate diagram explaining reduction of perspective distortion in a processed image in accordance with an example embodiment. As illustrated in FIGURE 5, a processed image may be generated by stitching a first image 502 and a second image 504. The first image 502 and the second image 504 may include an overlap region between them. As discussed with reference to FIGURES 3, 4A and 4B, one or more intermediate planes (for example, an intermediate plane 506) may be determined in the overlap region and the portions of the overlap regions of the first image and the second image may be projected onto the intermediate plane. In an embodiment, if an image portion (for example, an object in the image) is beyond a threshold distance from the center of the image, the content of the image portion in the processed image is distorted. Herein, a distance of the portions of the first image and the second image associated with the overlap region may be determined, as the portions of images closer to the center of the image may be projected onto the intermediate plane. For example, referring to FIGURE 5, an object 508 may be associated with the overlap region of the first image and the second image. The distance of the object 508 in the first image 502 and the second image 504 from the center 510 may be shown as line represented as 510-512 and 510-514, respectively. As illustrated in the FIGURE, the distance 510-514 (distance of the object from the center in the second image) is smaller than the distance 510-512 (distance of the object from the center in the first image), and therefore the projection of the object 508 at a point 516 on the intermediate plane 506 may be taken from the second image. In an embodiment, due to the selection of portions of image regions closer to the center, avoids or minimizes perspective distortion in the processed images, for example, in panorama images. In another embodiment, the distances of the object in the first image and the second image from the center of the respective image may be compared with a threshold distance. The image, in which the distance of the object from the center of the respective image is lesser than the threshold distance, may provide for the image of the object in the processed image.

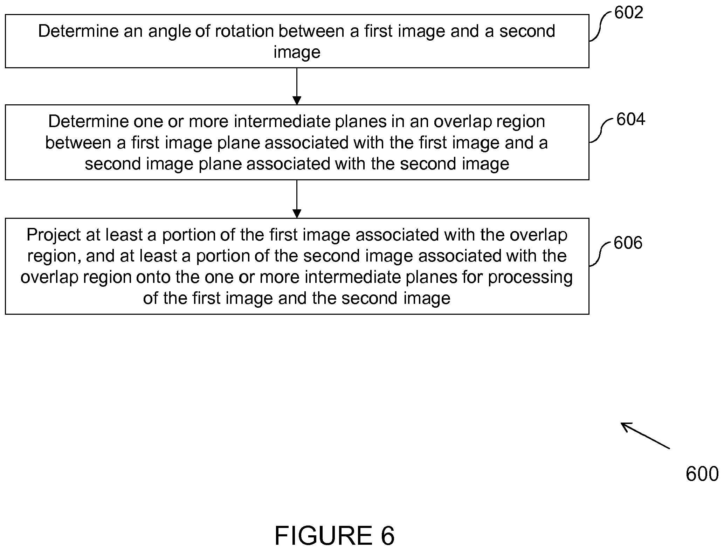

FIGURE 6 is a flowchart depicting an example method 600 for processing images, in accordance with an example embodiment. The method depicted in the flow chart may be executed by, for example, the apparatus 300 of FIGURE 3. In some embodiments, the processed image may be generated by determining an overlap region between the adjacent images, and determining one or more intermediate planes in the overlap regions. Portions of the adjacent images corresponding to the overlap region may be projected on the one or more intermediate plane for determining seams in the one or more intermediate planes. In some embodiments, the plurality of images may be captured by an multimedia capturing device, or may be retrieved from a memory of a device, for example, the device 200 (refer to FIGURE 2) for generating the panorama image.

In an example embodiment, the plurality of images may be associated with a scene, such that each of the plurality of images may correspond to at least a portion of the scene. As disclosed herein, the plurality of images may include adjacent images such that any two adjacent images of the plurality of images may include a common portion or an overlapping region. For example, the plurality of images may include a first image and a second image having an overlapping region between them. As disclosed herein, the terms 'first image' and 'second image' refers to successive (or adjacent) images associated with a scene, such that the first image and the second image comprises at least an overlapping region. An example illustrating the first image and the second image is illustrated and described in detail with reference to FIGURE 6. It is noted that in various embodiments, the second image may succeed the first image, and vice-versa. Also, it will be contemplated that for the generation of the processed image, the plurality of images may be input, and each image of the plurality of images may be stitched with at least one of a succeeding image and a preceding image by utilizing the method disclosed herein.

In some embodiments, the plurality of images, for example the first image and the second image may be associated with image features, for example, a first set of features and a second set of features, respectively. At block 602, the method 600 includes determining an angle of rotation between a first image and a second image. In an embodiment, the angle of rotation is indicative of an overlap region between the first image and the second image. The angle of rotation is determined based on a threshold distortion of a first set of image features associated with the first image upon being projected onto the second image. In an embodiment, the projections of the second set of image features having minimum distortion with respect to the first set of image features may be utilized for computing the angle of rotation. The angle of rotation is explained in detail with reference to FIGURE 1.

At block 604, one or more intermediate planes are determined in the overlap region between a first image plane associated with the first image and a second image plane associated with the second image. In an embodiment, the one or more intermediate planes may include a single intermediate plane. In an embodiment, the one or more intermediate planes are configured to be separated by the first image plane and the second image plane by an intermediate projection angle that is function of the first projection angle, theta. For example, the one or more intermediate planes may include four intermediate planes between the first image plane and the second image plane, so that the four intermediate planes divide the angle theta into five portions, each portion having an angular span of theta/five degrees at the COP. Various example embodiments illustrating single and multiple intermediate image planes are explained with reference to FIGURES 4A and 4B.

In an embodiment, the one or more intermediate planes may be determined by computing projection of points in the vicinity of a periphery of the overlap region. The points may be joined by, for example, a line in 3-D to determine an intermediate plane. In an embodiment, a plurality of intermediate planes may be determined between the first image plane and the second image plane in a manner that the projections of the plurality of the intermediate planes at the reference point partitions the angle of rotation, for example, the angle theta between the first image plane and the second image plane is divided into equal angular spans. Moreover, the number of partitions of the angle of rotation is one more than the number of intermediate planes. For example, for five numbers of intermediate planes, the number of partitions of the angle of rotation (for example, the angle theta) is equal to six. In another embodiment, the plurality of intermediate planes may be determined between the first image plane and the second image plane by dividing the angle of rotation by an integer indicative of the number of intermediate planes. For example, for 'n' intermediate planes between the first image plane and the second image plane, the angle theta may be divided by (n+1) such that each successive intermediate plane may be separated from an adjacent image and/or intermediate plane by an angle theta/(n+1) degrees. Accordingly, a first intermediate plane may be positioned at an angle theta/(n+1) degrees from the first image plane, a second intermediate plane may be positioned at an angle of theta/(n+1) degrees from the second intermediate plane, and so on.

At block 606, at least a portion of the first image associated with the overlap region, and at least a portion of the second image associated with the overlap region are projected onto the one or more intermediate planes. In an embodiment, at least the portion associated with the overlap region between the first image and the second image may be determined based on a distance of the portion of the image from a reference point (for example, the center of the respective image). In an embodiment, the portion of the image closer to the center is utilized for projecting onto the intermediate plane. For example, an overlap portion of the first image and the second image may include a vehicle, such that if the image of the rear wheels of the vehicle is taken from the second image, then it is closer to the center of the second image as compared to the image of the rear wheels taken from the first image with respect to the center of the first image. In a similar manner, the image of the front wheels of the vehicle is taken from the first image, then it is closer to the center of the first image as compared to the image of front wheels taken from the second image with respect to the center of the second image. While projecting the image of the car onto the intermediate plane, the projection of the rear wheels may be taken from the second image while the projection of the front wheels may be taken from the first image. In an embodiment, the projections of the portions of the image in the overlap region onto the one or more intermediate planes may be stitched together by utilizing one or more seams or by utilizing image blending techniques for generating a processed image, for example, a panorama image of the first image and the second image. In another embodiment, the projections of the portions of the image in the overlap region onto the one or more intermediate planes may be stitched together by utilizing one or more seams or by utilizing image blending techniques for generating a processed video content.

As disclosed herein with reference to FIGURE 6, the method for processing of multimedia content, for example images is explained by utilizing two images, for example, the first image and the second image. However, it will be contemplated that a processed multimedia content of more than two images may be generated based on the method 600. For example, for more than two images, each image may be stitched with a successive image or a preceding image by utilizing the method 600. For instance, an angle of rotation may be determined between each of the successive images of the plurality of images and one or more intermediate planes may be determined between each of the successive images. Each of the successive images may be stitched together by utilizing the seams associated with the overlap portions of the successive images to finally generate a processed multimedia content.

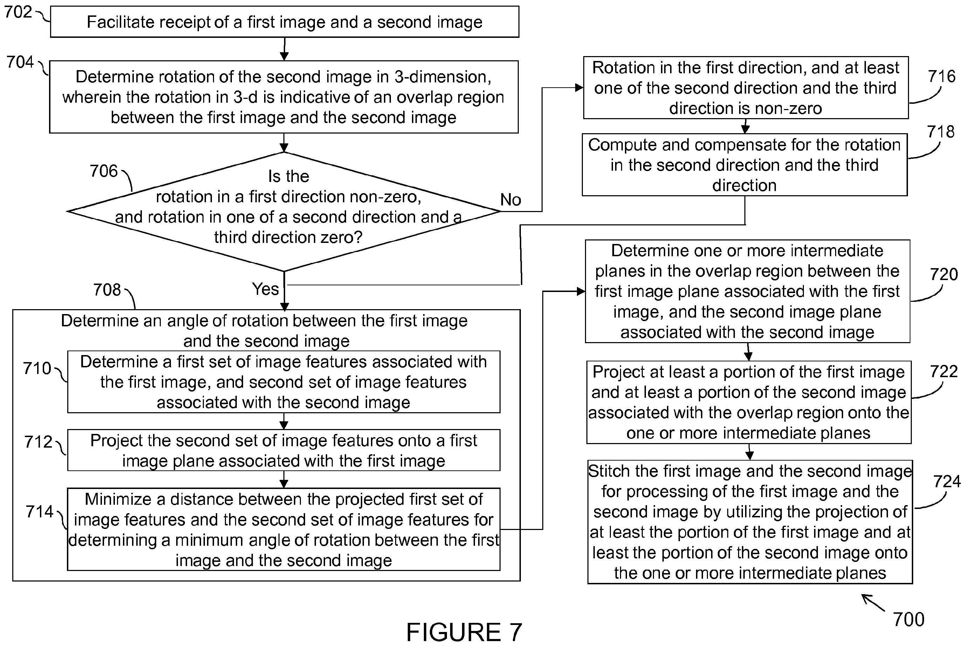

In an example embodiment, a processing means may be configured to perform some or all of: determining an angle of rotation between a first image and a second image associated with a multimedia content; determining one or more intermediate planes in the overlap region between a first image plane associated with the first image and a second image plane associated with the second image; and projecting at least a portion of the first image associated with the overlap region and at least a portion of the second image associated with the overlap region onto the one or more intermediate planes for processing of the first image and the second image. An example of the processing means may include the processor 302, which may be an example of the controller 208. Another method for generating a processed image is explained in detail with reference to FIGURE 7.

FIGURE 7 illustrates a flowchart depicting an example method 700 for processing a multimedia content, in accordance with another example embodiment. In an embodiment, the term multimedia content may be construed as inclusive of image content, video content, and the like. In an embodiment, processing the multimedia content may include processing of images. For example, processing the images may include generating a panorama image. In another embodiment, processing the multimedia content may include processing of video content. The method 700 depicted in flow chart may be executed by, for example, the apparatus 300 of FIGURE 3. Operations of the flowchart, and combinations of operation in the flowchart, may be implemented by various means, such as hardware, firmware, processor, circuitry and/or other device associated with execution of software including one or more computer program instructions. For example, one or more of the procedures described in various embodiments may be embodied by computer program instructions. In an example embodiment, the computer program instructions, which embody the procedures, described in various embodiments may be stored by at least one memory device of an apparatus and executed by at least one processor in the apparatus. Any such computer program instructions may be loaded onto a computer or other programmable apparatus (for example, hardware) to produce a machine, such that the resulting computer or other programmable apparatus embody means for implementing the operations specified in the flowchart. These computer program instructions may also be stored in a computer-readable storage memory (as opposed to a transmission medium such as a carrier wave or electromagnetic signal) that may direct a computer or other programmable apparatus to function in a particular manner, such that the instructions stored in the computer-readable memory produce an article of manufacture the execution of which implements the operations specified in the flowchart. The computer program instructions may also be loaded onto a computer or other programmable apparatus to cause a series of operations to be performed on the computer or other programmable apparatus to produce a computer-implemented process such that the instructions, which execute on the computer or other programmable apparatus provide operations for implementing the operations in the flowchart.

The operations of the method 700 are described with help of apparatus 300. However, the operations of the method can be described and/or practiced by using any other apparatus.

Referring now to FIG. 7, at block 702, the method 700 includes facilitating receipt of a plurality of images, for example a first image and a second image associated with the multimedia content. In an example embodiment, the first image and the second image may be associated with a scene. In an example embodiment, each of the plurality of images may be associated with at least a portion of the scene. In some embodiments, the first image and the second image may include at least an overlap region. As disclosed herein, the terms 'first image' and 'second image' refers to successive (or adjacent) images associated with a scene, such that the first image and the second image comprises at least an overlap region. An example illustrating the first image and the second image is illustrated and described in detail with reference to FIGURE 1. It is noted that although in this embodiment, the second image succeeds the first image, it will be contemplated that in alternate embodiments, the first image may succeed the second image. Also, it will be contemplated that for the generation of a processed image, more than two images may be input, and these image may be stitched by utilizing the method disclosed herein.

In an embodiment, the plurality of images may be captured by utilizing a multimedia capturing device. In an embodiment, the multimedia capturing device may be rotated in a direction for capturing images. For example, the multimedia capturing device may capture a first image, and thereafter rotated by an angle, also known as angle of rotation for capturing the second image. At block 704, the rotation of the second image is determined. In an embodiment, the angle of rotation is determined in 3-D. In an embodiment, the angle of rotation in 3-D is indicative of an overlap region between the first image and the second image.

At block 706, it is determined whether the rotation of the multimedia capturing device (or the second image) in a first direction is non-zero, and the rotation in one of a second direction and a third direction is zero. For example, the multimedia capturing device may be rotated around y-axis, then the rotation of the multimedia capturing device around y-axis is non-zero, however the rotation around at least one of the x-axis and z-axis may or may not be zero. In another embodiment, the media capturing device may be rotated in a vertical direction for facilitating the generation of a panorama image. For example, the media capturing device may be moved from top to bottom or from bottom to top direction. In the present embodiment, the first direction is about x-axis, the second direction is about y-axis and the third direction is about z-axis. If it is determined at block 706 that the rotation in the first direction is non-zero and the rotation in at least one of the second direction and the third direction is zero, then the rotation about the y-axis is computed, at block 708. The determination of the angle of rotation between the first image and the second image at block 708 is performed by executing blocks 710-714.

At block 710, a first set of image features associated with the first image, and second set of image features associated with the second image are determined. In an embodiment, the first set of image features and the second set of image features may be computed based on Harris corner detection method. In another example embodiment, the first set of image features and the second set of image feature may be determined based on a corner detection method. At block 712, the second set of image features may be projected onto a first image plane associated with the first image. At block 714, a distance between the projected first set of image features and the second set of image features may be minimized for determining a minimum angle of rotation between the first image and the second image. In an example embodiment, the distance between the projected first set of image features and the second set of image features may be minimized based on the following equation:

$$E(th) = \sum (x_1^i - x'_2^i)^2 + (y_1^i - y'_2^i)^2$$

In an example embodiment, the following equation may be utilized for computing the values of the projected image features of the second image:

$$x_2' = f * (d_x - r * \cos(th))/(f + r * \sin(th));$$

$$y_2' = f * y_2 /(f + r * \sin(th));$$

where,

$$r = w/2 - d_x - x_2 ;$$

and

$$d_x = f * \tan(th/2)$$

In an embodiment, it may be determined at block 716, that the rotation in the first direction (for example, about y-axis), and at least one of the second direction (for example, about x-axis) and the third direction (for example, about z-axis) is non-zero, then at block 718, the rotation in the second direction and the third direction is computed and compensated. In an embodiment, the angle beta (β) is represents an in-plane rotation between the images (for example, the first image and the second image) or frames around z-axis.

In the first image, a plurality of vertical lines is computed by joining image features from the first set of image features. Also, in the second image, a plurality of straight lines are determined from a matching second set of image features corresponding to the image features of the first set of image features. For example, the combinations of vertical lines (having slopes thereof in the range of 90 +/- 2 degrees) are considered in the first image and the corresponding straight lines in the second image may be determined. In an embodiment, a deviation of the slope of the plurality of straight lines from the corresponding plurality of vertical lines is computed. In an embodiment, an average of the computed deviations is determined to compute the angle beta ($\beta$). It will be noted that the vertical straight lines are preserved in a specific type of projective transformation, where the projective transformation is caused only by rotation around y-axis and hence the angle beta ($\beta$) is computed by using vertical straight lines. The angle alpha($\alpha$) around x-axis can be approximated as a translation along the vertical direction in a spatial domain in the image and is computed by exhaustively searching in a specified range. In the present embodiment, -Th < d$\alpha$ <Th, where d$\alpha$ is the vertical translation used instead of angle $\alpha$, and Th =H/20, wherein H is the height of the first image.

At block 720, one or more intermediate planes may be determined in the overlap region between the first image plane associated with the first image, and the second image plane associated with the second image. In an embodiment, the one or more intermediate image planes may include a single intermediate plane. In an embodiment, the one or more intermediate image planes may include multiple intermediate planes. In an embodiment, the one or more intermediate image planes are configured to divide the angle theta in a manner that the projections of the plurality of the intermediate planes at the reference point partitions the angle of rotation, for example, the angle theta between the first image plane and the second image plane into equal angular spans. Moreover, the number of partitions of the angle of rotation is one more than the number of intermediate planes. For example, for five number of intermediate planes, the number of partitions of the angle of rotation (for example, the angle theta) is equal to six.

At block 722, at least a portion of the first image and at least a portion of the second image associated with the overlap region is projected onto the one or more intermediate planes. In an embodiment, at least the portion associated with the overlap region between the first image and the second image may be determined based on a distance of the portion of the image from a reference point (for example, the center of the image). In an embodiment, the portion of the image closer to the center is utilized for projecting onto the intermediate plane. In an embodiment, the projections of the portions of the image in the overlap region onto the one or more intermediate planes may be stitched together at block 724, for processing the first image and the second image. For example, one or more seams in the one or more intermediate planes may be determined for stitching the portions of the images in the overlap region, and the first image and the second image may be stitched together by utilizing the one or more seams to generate a panorama image.

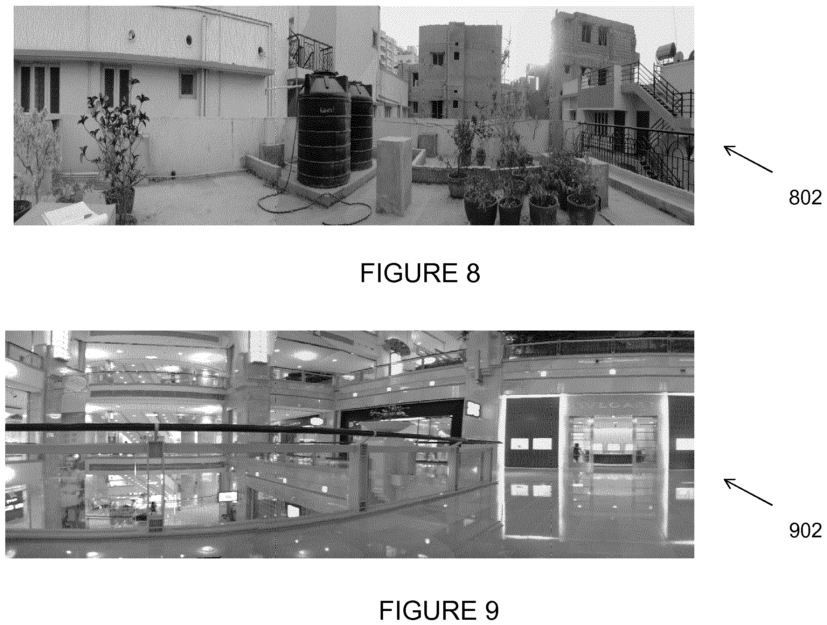

To facilitate discussion of the method 700 of FIGURE 7, certain operations are described herein as constituting distinct steps performed in a certain order. Such implementations are exemplary and non-limiting. Certain operations may be grouped together and performed in a single operation, and certain operations can be performed in an order that differs from the order employed in the examples set forth herein. Moreover, certain operations of the method 700 are performed in an automated fashion. These operations involve substantially no interaction with the user. Other operations of the method 700 may be performed by in a manual fashion or semiautomatic fashion. These operations involve interaction with the user via one or more user interface presentations. Various examples for generation of panorama images based on the methods (such as methods 600 and 700) and devices disclosed herein are described with reference to FIGURES 8 and 9.

FIGURES 8 and 9 illustrate processed images, for example panorama images being generated in accordance with example embodiments. As depicted herein, the panorama images 802 and 902 (being generated based on the methods 600 and 700) includes minimum distortion and curving of lines. For example, with a specific reference to the left and right portions of the image, the images lines appear straight rather than curved.

Without in any way limiting the scope, interpretation, or application of the claims appearing below, a technical effect of one or more of the example embodiments disclosed herein is to generate panorama images. The disclosed embodiments facilitates in generating panorama image with minimum distortion of straight lines in the component images thereof. Various embodiments facilitates in determination of one or more intermediate image planes in an overlap region of the component images, and generating the panorama image by combining the one or more intermediate planes. In an embodiment, the generation of the panorama image facilitates in reducing the perspective distortion in the images. In various embodiments disclosed herein, the post-processing of the panorama image is precluded since during the generation of the panorama image, the distortion therein is minimized. Moreover, various method steps are performed at least in parts or under certain circumstances automatically, thereby precluding the need of user intervention for generating the panorama image.

Various embodiments described above may be implemented in software, hardware, application logic or a combination of software, hardware and application logic. The software, application logic and/or hardware may reside on at least one memory, at least one processor, an apparatus or, a computer program product. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of an apparatus described and depicted in FIGURES 2 and/or 3. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications, which may be made without departing from the scope of the present disclosure as defined in the appended claims.

**Claims**

1. A method (600, 700) comprising:

   determining (602 708) an angle of rotation between a first image and a second image associated with a multimedia content, the images being captured by a media capturing device rotating through a range of angles;
   determining (604, 720) one or more intermediate planes in an overlap region between a first image plane associated with the first image and a second image plane associated with the second image such that the one or more intermediate planes are separated from the first and second images planes by an intermediate angle that is a function of the angle of rotation;
   projecting (606, 722) at least a portion of the first image associated with the overlap region and at least a portion of the second image associated with the overlap region onto the one or more intermediate planes for processing of the first image and the second image; and
   stitching (724) the first image and the second image by utilizing the projection of at least the portion of the first image and at least the portion of the second image onto the one or more intermediate planes for generating a panorama image by utilizing the first image and the second image.

2. The method as claimed in claim 1, wherein the angle of rotation being indicative of an overlap region between the first image and the second image, and wherein the angle of rotation being associated with a distortion of a first set of image features associated with the first image upon being projected onto the second image.

3. The method as claimed in claims 1 or 2, wherein determining the angle of rotation comprises:

   determining the first set of image features associated with the first image and a second set of image features associated with the second image;
   projecting the first set of image features onto the second image plane; and minimizing a distance between the projected first set of image features and the second set of image features.

4. The method as claimed in claims 1 to 3, wherein determining the angle of rotation further comprises minimizing:

$$E(th) = \sum (x_1^{\,i} - x'_2^{\,i})^2 + (y_1^{\,i} - y'_2^{\,i})^2$$

   wherein,

   $x_1^{\,i}$, $y_1^{\,i}$ are the first set of image features for different values of $i$,
   $x_2^{\,i}$, $y_2^{\,i}$ are the second set of image features for various values of $i$, and
   $th$ is the angle of rotation.

5. The method as claimed in claims 1 to 4, wherein determining the one or more intermediate planes comprises determining a plurality of intermediate planes in the overlap region between the first image plane associated with the first image and the second image plane associated with the second image.

**6.** The method as claimed in any of claims 1 to 5, wherein determining the one or more intermediate planes comprises dividing said angle of rotation into equal angular spans to determined said intermediate angle.

**7.** The method as claimed in claims 1 to 6, wherein projecting at least a portion of the first image and at least a portion of the second image on the one or more intermediate planes comprises:

determining a distance of an image feature in the first image and in the second image from a respective reference point; and
projecting said image feature from one of the first image and the second image based on the determined distances.

**8.** The method as claimed in claim 7, wherein the reference point comprises a center of a respective image.

**9.** The method as claimed in claims 1 to 8, wherein determining the angle of rotation comprises:

computing the angle of rotation associated with a first direction, a second direction and a third direction; and
compensating for the angle of rotation associated with the second direction and the third direction.

**10.** An apparatus comprising means configured to perform method as claimed in any of claims 1 - 9.

**11.** A computer program comprising program instructions which when executed by an apparatus cause the apparatus to perform method as claimed in any of claims 1 - 9.

**Patentansprüche**

**1.** Verfahren (600, 700), umfassend:

Bestimmen (602, 708) eines Drehwinkels zwischen einem ersten Bild und einem zweiten Bild, die mit einem Multimediainhalt verbunden sind, wobei die Bilder durch eine Medienaufnahmevorrichtung, die sich über einen Bereich von Winkeln dreht, aufgenommen werden;
derartiges Bestimmen (604, 720) einer oder mehrerer Zwischenebenen in einem Überlappungsbereich zwischen einer ersten Bildebene, die mit dem ersten Bild verbunden ist, und einer zweiten Bildebene, die mit dem zweiten Bild verbunden ist, dass die eine oder die mehreren Zwischenebenen von der ersten und der zweiten Bildebene um einen Zwischenwinkel, der eine Funktion des Drehwinkels ist, getrennt ist oder sind;
Projizieren (606, 722) wenigstens eines Teils des ersten Bilds, der mit dem Überlappungsbereich verbunden ist, und wenigstens eines Teils des zweiten Bilds, der mit dem Überlappungsbereich verbunden ist, auf die eine oder die mehreren Zwischenebenen, um das erste und das zweite Bild zu verarbeiten; und
Aneinanderheften (724) des ersten Bilds und des zweiten Bilds durch Benutzen der Projektion wenigstens des Teils des ersten Bilds und wenigstens des Teils des zweiten Bilds auf die eine oder die mehreren Zwischenebenen, um unter Benutzung des ersten Bilds und des zweiten Bilds ein Panoramabild zu erzeugen.

**2.** Verfahren nach Anspruch 1, wobei der Drehwinkel einen Überlappungsbereich zwischen dem ersten Bild und dem zweiten Bild angibt, und wobei der Drehwinkel mit einer Verzerrung eines ersten Satzes von Bildmerkmalen, der mit dem ersten Bild verbunden ist, bei seiner Projektion auf das zweite Bild verbunden ist.

**3.** Verfahren nach Anspruch 1 oder 2, wobei das Bestimmen des Drehwinkels
das Bestimmen des ersten Satzes von Bildmerkmalen, der mit dem ersten Bild verbunden ist, und eines zweiten Satzes von Bildmerkmalen, der mit dem zweiten Bild verbunden ist;
das Projizieren des ersten Satzes von Bildmerkmalen auf die zweite Bildebene; und
das Minimieren eines Abstands zwischen dem projizierten ersten Satz von Bildmerkmalen und dem zweiten Satz von Bildmerkmalen
umfasst.

**4.** Verfahren nach Anspruch 1 bis 3, wobei das Bestimmen des Drehwinkels ferner das Minimieren von

$$E(th) = \sum (x_1{}^i - x'_2{}^i)^2 + (y_1{}^i - y'_2{}^i)^2$$

umfasst, wobei

$x_1{}^1$, $y^1{}_i$ der erste Satz von Bildmerkmalen für verschiedene Werte von *i* ist,
$x_2{}^1$, $y_2{}^1$ der zweite Satz von Bildmerkmalen für verschiedene Werte von *i* ist, und
*th* der Drehwinkel ist.

5. Verfahren nach Anspruch 1 bis 4, wobei das Bestimmen der einen oder mehreren Zwischenebenen das Bestimmen von mehreren Zwischenebenen in dem Überlappungsbereich zwischen der mit dem ersten Bild verbundenen ersten Bildebene und der mit dem zweiten Bild verbundenen zweiten Bildebene umfasst.

6. Verfahren nach einem der Ansprüche 1 bis 5, wobei das Bestimmen der einen oder mehreren Zwischenebenen das Teilen des Drehwinkels in gleiche Winkelbereiche, um den Zwischenwinkel zu bestimmen, umfasst.

7. Verfahren nach Anspruch 1 bis 6, wobei das Projizieren wenigstens eines Teils des ersten Bilds und wenigstens eines Teils des zweiten Bilds auf die eine oder die mehreren Zwischenebenen das Bestimmen eines Abstands eines Bildmerkmals in dem ersten Bild und in dem zweiten Bild von einem jeweiligen Bezugspunkt; und
das Projizieren des Bildmerkmals von einem aus dem ersten Bild und dem zweiten Bild auf Basis der bestimmten Abstände
umfasst.

8. Verfahren nach Anspruch 7, wobei der Bezugspunkt eine Mitte eines jeweiligen Bilds umfasst.

9. Verfahren nach Anspruch 1 bis 8, wobei das Bestimmen des Drehwinkels
das Berechnen des mit einer ersten Richtung, einer zweiten Richtung und einer dritten Richtung verbundenen Drehwinkels; und
das Ausgleichen des mit der zweiten Richtung und der dritten Richtung verbundenen Drehwinkels umfasst.

10. Vorrichtung, umfassend ein Mittel, das dazu ausgebildet ist, das Verfahren nach einem der Ansprüche 1 bis 9 durchzuführen.

11. Computerprogramm, umfassend Programmbefehle, die bei Ausführung durch eine Vorrichtung die Vorrichtung dazu bringen, das Verfahren nach einem der Ansprüche 1 bis 9 durchzuführen.


**Revendications**

1. Procédé (600, 700) consistant à :

déterminer (602, 708) un angle de rotation entre une première image et une seconde image associées à un contenu multimédia, les images étant capturées par un dispositif de capture de média tournant dans une plage d'angles ;
déterminer (604, 720) un ou plusieurs plans intermédiaires dans une région de chevauchement entre un premier plan d'image associé à la première image et un second plan d'image associé à la seconde image de sorte que le ou les plans intermédiaires soient séparés des premier et second plans d'image par un angle intermédiaire qui est fonction de l'angle de rotation ;
projeter (606, 722) une partie au moins de la première image associée à la région de chevauchement et une partie au moins de la seconde image associée à la région de chevauchement sur le ou les plans intermédiaires afin de traiter la première image et la seconde image ; et
raccorder (724) la première image et la seconde image en utilisant la projection de la partie au moins de la première image et de la partie au moins de la seconde image sur le ou les plans intermédiaires afin de générer une image panoramique en utilisant la première image et la seconde image.

2. Procédé selon la revendication 1, dans lequel l'angle de rotation indique une région de chevauchement entre la première image et la seconde image, et dans lequel l'angle de e rotation est associé à une distorsion d'un premier ensemble de caractéristiques d'image associé à la première image lors de la projection sur la seconde image.

3. Procédé selon la revendication 1 ou 2, dans lequel déterminer l'angle de rotation consiste à :

déterminer le premier ensemble de caractéristiques d'image associé à la première image et un second ensemble de caractéristiques d'image associé à la seconde image ;
projeter le premier ensemble de caractéristiques d'image sur le second plan d'image ; et
réduire au maximum la distance entre le premier ensemble projeté de caractéristiques d'image et le second ensemble de caractéristiques d'image.

4. Procédé selon les revendications 1 à 3, dans lequel déterminer l'angle de rotation consiste en outre à réduire au maximum :

$$E(th) = \sum (x_1^i - x'^i_2)^2 + (y_1^i - y'^i_2)^2$$

où $x_1^i, y_i^1$ représentent le premier ensemble de caractéristiques d'image pour différentes valeurs de $i$,

$x_2^i, y_2^i$ représentent le second ensemble de caractéristiques d'image pour différentes valeurs de $i$, et

th représente l'angle de rotation.

5. Procédé selon les revendications 1 à 4, dans lequel déterminer le ou les plans intermédiaires consiste à déterminer plusieurs plans intermédiaires dans la région de chevauchement entre le premier plan d'image associé à la première image et le second plan d'image associé à la seconde image.

6. Procédé selon l'une quelconque des revendications 1 à 5, dans lequel déterminer le ou les plans intermédiaires consiste à diviser l'angle de rotation en plages angulaires égales correspondant à l'angle intermédiaire déterminé.

7. Procédé selon les revendications 1 à 6, dans lequel la projection d'une partie au moins de la première image et d'une partie au moins de la seconde image sur le ou les plans intermédiaires consiste à :

déterminer une distance d'une caractéristique d'image dans la première image et dans la seconde image par rapport à un point de référence respectif ; et
projeter la caractéristique d'image depuis l'une de la première image et de la seconde image en fonction des distances prédéterminées.

8. Procédé selon la revendication 7, dans lequel le point de référence comprend un centre d'une image respective.

9. Procédé selon l'une des revendications 1 à 8, dans lequel la détermination de l'angle de rotation consiste à :

calculer l'angle de rotation associé à une première direction, une seconde direction et une troisième direction ; et
compenser l'angle de rotation associé à la seconde direction et à la troisième direction.

10. Appareil comprenant un moyen conçu pour réaliser le procédé selon l'une quelconque des revendications 1 à 9.

11. Programme informatique comprenant des instructions de programme qui, lorsqu'exécutées par un appareil, font que l'appareil réalise le procédé selon l'une quelconque des revendications 1 à 9.

FIGURE 1B

FIGURE 1A

FIGURE 2

FIGURE 3

FIGURE 4B

FIGURE 4A

FIGURE 5

EP 2 677 499 B1

Determine an angle of rotation between a first image and a second image _/⌐602

Determine one or more intermediate planes in an overlap region between a first image plane associated with the first image and a second image plane associated with the second image _/⌐604

Project at least a portion of the first image associated with the overlap region, and at least a portion of the second image associated with the overlap region onto the one or more intermediate planes for processing of the first image and the second image _/⌐606

600

FIGURE 6

**EP 2 677 499 B1**

702 — Facilitate receipt of a first image and a second image

704 — Determine rotation of the second image in 3-dimension, wherein the rotation in 3-d is indicative of an overlap region between the first image and the second image

716 — Rotation in the first direction, and at least one of the second direction and the third direction is non-zero

718 — Compute and compensate for the rotation in the second direction and the third direction

706 — Is the rotation in a first direction non-zero, and rotation in one of a second direction and a third direction zero?

No

Yes

720 — Determine one or more intermediate planes in the overlap region between the first image plane associated with the first image, and the second image plane associated with the second image

708 — Determine an angle of rotation between the first image and the second image

710 — Determine a first set of image features associated with the first image, and second set of image features associated with the second image

712 — Project the second set of image features onto a first image plane associated with the first image

714 — Minimize a distance between the projected first set of image features and the second set of image features for determining a minimum angle of rotation between the first image and the second image

722 — Project at least a portion of the first image and at least a portion of the second image associated with the overlap region onto the one or more intermediate planes

724 — Stitch the first image and the second image for processing of the first image and the second image by utilizing the projection of at least the portion of the first image and at least the portion of the second image onto the one or more intermediate planes

700

FIGURE 7

FIGURE 8

FIGURE 9

EP 2 677 499 B1

**EP 2 677 499 B1**

**REFERENCES CITED IN THE DESCRIPTION**

**Patent documents cited in the description**

- EP 2389006 A2